# EUROPEAN PATENT SPECIFICATION

(11) **EP 2 109 557 B1**
(45) Date of publication and mention of the grant of the patent: **27.04.2011**
(21) Application number: 07866974.4
(22) Date of filing: 18.12.2007
(51) Int. Cl.: B60S 1/38

(54) **A SPOILER FOR VEHICLE WINDSHIELD WIPERS**
SPOILER FÜR FAHRZEUGSCHEIBENWISCHER
BECQUET POUR ESSUIE-GLACES DE VÉHICULE

(30) Priority: 19.12.2006 TR 200607243
(43) Date of publication of application: 21.10.2009
(73) Proprietor: Teklas Kaucuk Sanayi Ve Ticaret A.S., 41400, Kocaeli (TR)
(72) Inventor: BICICI, Banu, Gebze 41400 Kocaeli (TR); BOZKURTLU, Murat, Gebze 41400 Kocaeli (TR); SONMEZ, Bekir, Gebze 41400 Kocaeli (TR)
(74) Representative: Yavuzcan, Alev
(86) International application number: PCT/TR2007/000147
(87) International publication number: WO 2008/076088

(56) References cited:
- DE-A1- 10 335 394
- DE-A1-102004 015 423
- DE-A1-102005 037 269
- FR-A- 2 868 747
- US-A1- 2002 133 897
- US-B1- 6 523 218

## Description

The present invention relates to an esthetic spoiler fixed safely on the windshield wiper, that can be produced inexpensively and easily which is used for increasing the pressure load applied on the windshield at high speeds and utilized in the windshield wiper systems composed of a flat and long supporting framework made of resilient metal that is bent arcuately, an elastomer based wiper profile assembled on the framework having an end profile that wipes the surface of the windshield and the end caps at both of the free ends and an integrated connection element at the center used for the attachment of the windshield wiper arm.

### PRIOR STATE OF THE ART

In the technique known as the "flat blade" or "flat bar" technology, an elastomer based wiper profile for wiping the windshield surface, by means of the channels on both sides thereof, is mounted on a flat and long supporting framework made of resilient metal, bent to form basically an arcuate curve. The wiper arm, of which the other end is connected to an actuator in the vehicle, is attached lengthwise to the metal framework at approximately the center region by a connection clement from a single point, providing the windshield wiper to move on the windshield surface. During the movement of the windshield wiper on the surface of the windshield, the pressure force that the wiper profile has to apply on the windshield in order to perform the wiping function is maintained by the arcuately curved configuration of the resilient metal framework. However problems such as the windshield wiper moving upwards on the windshield in the parking position or reducing the wiping quality by decreasing the pressure force applied vertically on the windshield during wiping are encountered particularly at high speeds due to the uplifting force of the air flow acting on the wiper. In order to eliminate these, an additional component known as the spoiler is mounted lengthwise on the windshield wiper, remaining on the upper side of the metal framework with respect to the elastomer wiper profile or to partially cover the metal framework, having an aerodynamic configuration for directing the wind load such that the pressure force applied vertically on the windshield increases. The system is stabilized by mounting the end caps to both longitudinal free ends of the windshield wiper.

According to the technique explained in the patent no EP1512594, the spoiler is mounted on the wiper blade, with an additional less-flexible profile arranged in the section of the spoiler and extending lengthwise along the spoiler. This additional less-flexible profile, having a thin cross-section, is disposed lengthwise in a respective slot in the section of the spoiler, and functions to solidify the walls of the said slot. A longitudinal strip is formed on the upper region of the elastomer wiper profile that will be seated in the said groove. The assembly of the system is maintained by fitting longitudinal strips of a carrier element in the longitudinal grooves in a spaced-apart relationship. In this arrangement there is no direct connection with the spoiler and the carrier element. The unity of the system is maintained by connecting the spoiler made of a resilient material with the wiper profile again made of a resilient material with the logic of groove-protrusion and this system does not provide a safe connection for hard usage conditions.

According to the technique explained in patent no EP1627787, the supporting vertebrae and the elastomer wiper profile are mounted into grooves in the spoiler. In the interior of the spoiler having an "A" profile a chamber is formed with all the lateral sides closed except the rectangular cross-section at the base and the ones for lengthwise entry and exit. The supporting vertebrae is inserted lengthwise and seated into this chamber. At the lower portion of the spoiler, a second housing with a rectangular cross-section is provided. Again the four sides are closed, only having an opening at the bottom facing side for the neck to be inserted. At the upper part of the wiper profile, an additional bulging, connected to the body with the said thin neck, is provided to be inserted in this housing in the spoiler. The assembly of the system is completed by inserting the said rectangular cross-section bulging into the housing in the spoiler. In this technique, the portion of the wiper device that is movable and becomes deformed due to the friction on the windshield surface is assembled to the rest of the system by joining two elastomer based materials with a mechanical joint. The risk of the wiper blade detaching from the system exists in long term usage or in hard climate conditions.

According to the technique explained in patent no DE10044913, the wind deflector is assembled safely on the system by adhering the wind deflector on the metal framework by means of an adhesive. This technique is costly in production and can cause esthetic problems as the risk of smearing of the adhesive to visible parts exists. Furthermore, joining of an elastomer based resilient material onto metal at a small section using an adhesive will not provide a safe connection in different operating conditions and in the long term.

In order to eliminate the cited disadvantages, a spoiler is provided comprising elements in the interior surface for grasping the supporting framework.

Document US 2002/133897A discloses a spoiler according to the preamble of claim 1.

The present invention will be explicated in detail with reference to the attached figures below, where:

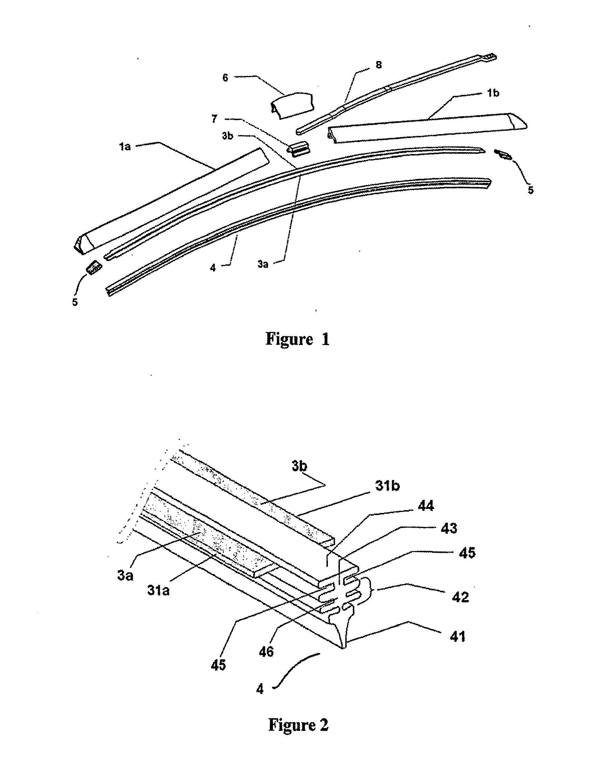

Figure 1 - is the exploded isometric view of the system wherein the spoiler of the present invention is used.
Figure 2 - is an isometric view of the assembled wiper profile and the supporting framework.
Figure 3 - is the view showing different embodiments of the supporting framework.
Figure 4 - is an isometric system view of the spoiler with one half exploded.
Figure 5 - is the perspective view of the clasping clip.
Figure 6 - is the view of the spoiler with the integrated clips exploded.

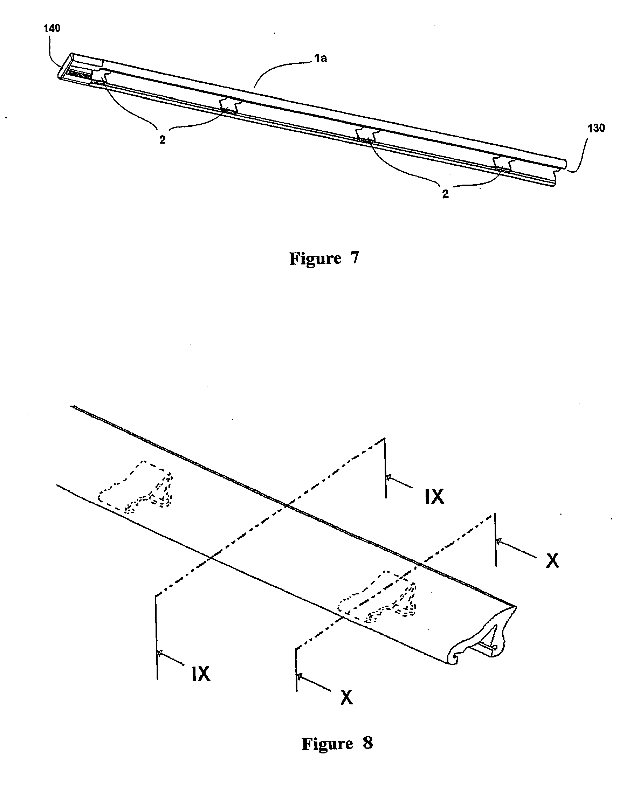

Figure 7 - is the bottom perspective view of the spoiler.
Figure 8 - is the top perspective view of the spoiler.
Figure 9 - is the cross-sectional view from a portion of the spoiler wherein there are no clips.
Figure 10 - is the cross-sectional view from a portion of the spoiler wherein there are clips.

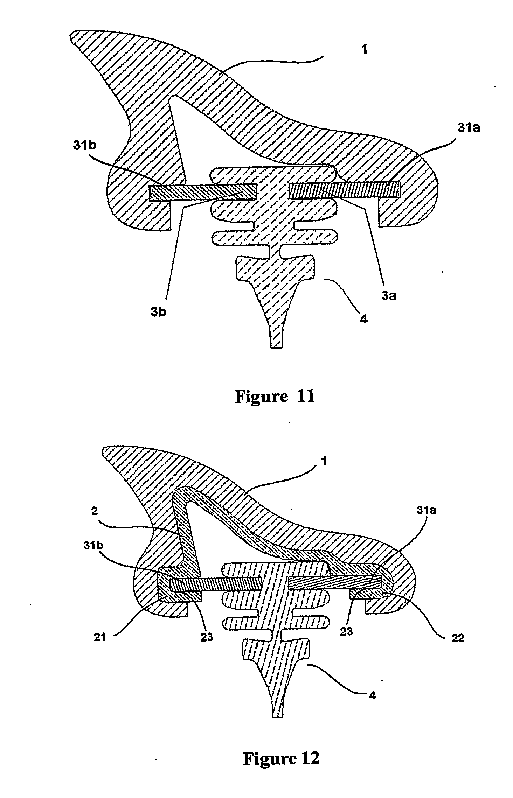

Figure 11 - is the cross-sectional view of the windshield wiper from a portion of the spoiler wherein there are no clips.
Figure 12 - is the cross-sectional view of the windshield wiper from a portion of the spoiler wherein there are clips.

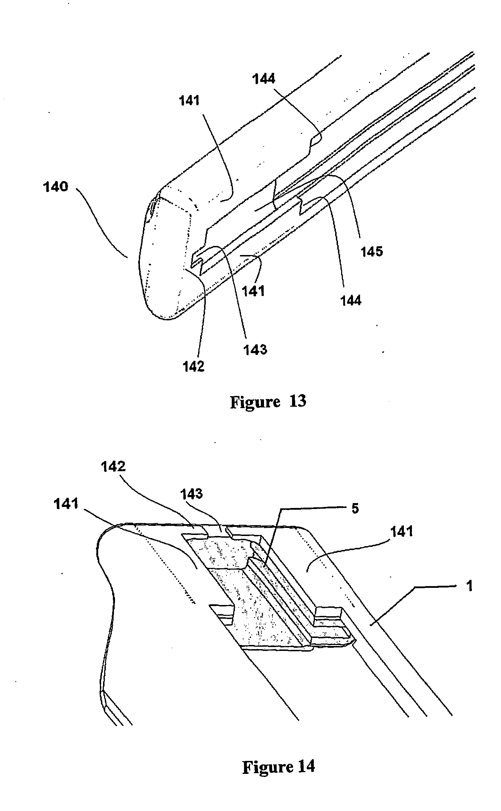

Figure 13 - is the bottom perspective view of the closed end of the spoiler.
Figure 14 - is the perspective view of the closed end of the spoiler with the end cap mounted thereon.

The elements illustrated in the figures are numbered as follows:
1. spoiler
2. clip
3. supporting framework
4. wiper profile
5. end caps
6. intermediary adaptor
7. connection element
8. wiper arm
11. arms
12. arms
13. housing
21. legs
22. legs
23. housing
24. profile
31. outward protrusions
41. end portion
42. body
43. neck
44. apex
45. channels
46. neck
110. outer surfaces
120. outer surfaces
130. end of the spoiler
140. closed end
141. lateral surfaces
142. lengthwise portion
143. housing
144. legs
145. housing
151. convex
155. base
156. recess
157. convex
158. apex point
159. concave
210. upper surfaces
220. upper surfaces

### THE DETAILED EXPLICATION OF THE PRESENT INVENTION

The present invention relates to a spoiler (1) used in windshield wiper systems known as the "flat blade" or "flat bar" technology, which is basically comprised of a flat and long supporting framework (3) made of resilient metal, bent to form an arcuate curve and an elastomer based wiper profile (4) for wiping the windshield surface mounted this framework and connected to a wiper arm (8), with one end attached to the vehicle, from only the center point directly by an auxiliary connection element (7) or by means of an intermediary adaptor (6), comprising elements in the interior surface for grasping the supporting framework and utilized for increasing the pressure force that the windshield wiper applies on the windshield at high speeds.

In the present invention, the wiper profile (4) that undertakes the windshield wiping function, made of an elastomer based material, is fixed on a supporting framework (3) made of a resilient metal material having a special arcuate curve. This framework (3) connected to the wiper arm (8) at a single point by a connection element (7) provides to distribute homogeneously the pressure force received from the center point thereof by means of the wiper arm (8) to every point of the windshield wiper by means of its arcuately curved configuration and resiliency. The unity of the wiper profile (4) and the supporting framework (3) is solidified by means of the end caps (5) mounted on the free ends.

The elastomer based wiper profile (4) comprises an end portion (41) at the lowermost side contacting the glass for actualizing the wiping function, a body (42) above that, having a channeled configuration designed to provide the profile end to stretch suitably for always contacting the windshield with the most suitable angle during the movement of the wiper and an apex (44) portion at the uppermost portion connected to the body with a neck (43) and is an element having a cross-section that is uniform along the longitudinal axis of the windshield wiper and is symmetrical with respect to the vertical axis at its center.

The supporting frame (3a, 3b) is disposed in the channels (45) on both sides of the wiper profile at the region wherein the body (42) and the apex portions (44) join with the neck (43). The framework, when is disposed in the channels of the profile, has a wider configuration than the channel (45) of the profile wherein it is seated to form outward protrusions (31a and 31b) on both sides.
According to the embodiment, the arcuately configured supporting framework (3) whereon the wiper profile (4) is mounted, can be composed of two independent and identical halves (3a and 3b) that will be connected from the ends after the assembly of the wiper profile (4) or a single piece connected at two ends, but having a lengthwise channel in the center for the wiper profile (4) to be fitted from the neck portion. In the case that the supporting framework is composed of two independent identical halves, the two halves (3a and 3b) are connected lengthwise at the center point by means of the connection element (7) that also makes the connection with the wiper arm (8) and the end caps (5) at the two free ends.
The end caps (5) are flat elements having a locking mechanism that attaches the two halves of the framework (3a and 3b) and the wiper profile (4) there between by pressing to each other at both free ends of the system and prevents dislodging from the system during the operation of the windshield wiper.

Particularly at high speeds, the lifting force of the air affecting the windshield wiper becomes dominant and causes the stationary windshield wiper to move upwards on the windshield or reduces the perpendicular pressure applied on the windshield during wiping hence decreasing the quality of wiping. In order to eliminate this, the spoiler (1) integrated on the windshield wiper is an independent component having an aerodynamic cross-section such that the flow direction of air coming on the windshield wiper is changed and the lifting effect of this force is eliminated thus increasing the perpendicular pressure exerted by the windshield wiper on the windshield, and also providing a minimum air resistance in order not to contribute to the total air resistance of the vehicle which is desired to be kept at a minimum for efficiency.

The spoiler (1) is an element having virtually an "A" cross-section, composed of two symmetrical halves (1a and 1b) that remain on both sides of the connection element (7) at the lengthwise center of the windshield wiper, mounted on the supporting framework (3) such that it will be at the upper side of the framework with respect to the wiper profile (4). The two arms (11 and 12) that start joined at the top, open up while extending downwards to wrap the framework by grasping the projecting parts (31a, 31b) of the metal framework from both sides and bending inwards. The inner surfaces of both arms (11, 12) of the spoiler (1) have a housing (13) configuration with a rectangular cross-section that will entirely tangentially surround the projecting parts (31a, 31b) of the supporting framework (3). The outer surfaces (110 and 120) have a curved contour such that an esthetic and aerodynamic structure is provided.
In the operating position, the vehicle windshield facing surface (110) of the spoiler (1), makes an inwards circular recess (156), starting from an imaginary horizontal base (155) that passes from the center of the metal framework (3) and displays a linear profile until reaching the apex point (158) to join with the wind receiving surface (120) depending on the direction of the vehicle in the operating position and meanwhile, diverges from the point started on the imaginary base line (155) towards the windshield by 2° to 15° (153). The wind receiving surface (120) of the spoiler, descends starting from the apex point (158) where the windshield facing surface (110) is joined, following a line that is first convex (157), then concave (159), then again convex (151) and meets with the imaginary base line (155) and at the same time makes an angle of between 20° to 45° (154) with the imaginary base line. Both of the surfaces (110, 120) below the imaginary base line (155) form convex surfaces that surround the supporting framework (3) from the sides and bend to the underside.

The end (130) of the spoiler (1) facing lengthwise the connection element (7) is open and the other end (140) corresponding with the free end of the windshield wiper (4) is closed for receiving in the framework (3) and/or the end cap (5).

The closed end (140) of the spoiler (1) is comprised of a lengthwise portion (142) that bends from the lengthwise end of the supporting framework (3) then again extends towards the center of the windshield wiper (4) and two lateral portions (141) that join with the said lengthwise portion (142) after bending downwards then inwards from both lateral sides of the said framework (3), and form a closed housing having a rectangular opening only on the side facing the wiper profile (4). This housing is provided such that the supporting framework (3) and if present the end cap (5) thereon are entirely covered from both sides and the ends, and partially from below. In an alternative embodiment of the present invention, the inwards extending lateral surfaces (141) at the closed end (140) are longer than the inwards bent legs (144) that surround the projecting parts (31a, 31b) of the metal framework (3) at the remaining part of the spoiler. The said shape at the closed side of the spoiler (1) prevents the closed end (140) of the spoiler (1) dislodging from the system during operation. The rectangular opening formed by the inwards extending surfaces (141 and 142) comprises a smaller additional housing (143) at the side facing the end of the spoiler (1). This additional housing (143) is only as wide to allow receiving the neck (46) at the body portion of the wiper profile (4). Thus the system is made safer by increasing the cross-section area of the surface (141) that bends downwards from the closed end (140) of the spoiler (1), minimizing the dead zone formed between the end point of the wiper profile (4) and the end point of the spoiler (1), which increases the length of the windshield wiper but does not contribute to the wiping area. A housing (145) is provided at the inner profile of the closed end (140) of the spoiler (1), for entirely and tangentially surrounding the outer surfaces of the supporting framework (3) at the end portion or, if present, the end cap (5). Thus when the spoiler (1) is mounted on the system, the supporting framework (3) or the end cap (5) is concealed from view.

The spoiler (1) is a resilient element that is produced from resilient plastic, thermoplastic elastomer, or from an elastomer based material by injection method.

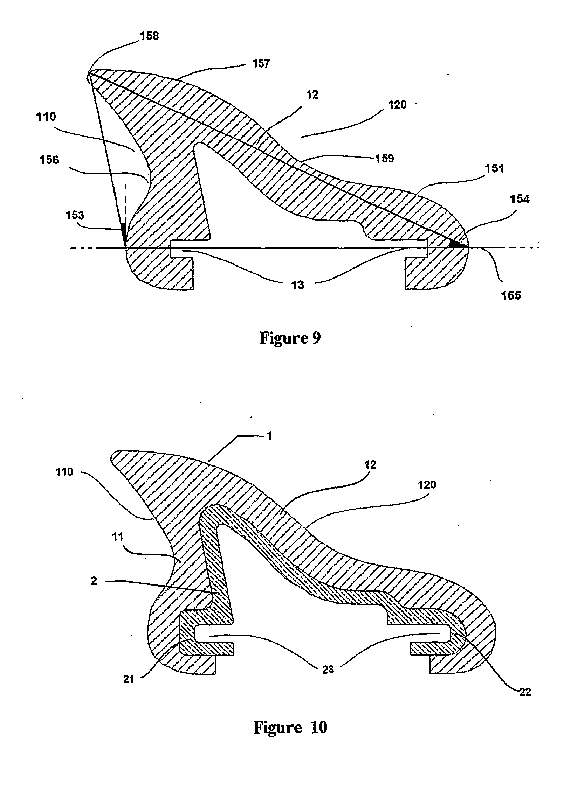

In order to safely assemble the spoiler (1) on the system, at least one clasping clip (2) is arranged at the interior section of the spoiler (1), integrated lengthwise to the spoiler (1) at certain intervals, having legs (21, 22) that firmly wrap the projecting parts (31 a, 31b) of the metal framework (3) and produced of a less resilient, preferably plastic, material with respect to the spoiler (1). (Figure 10)

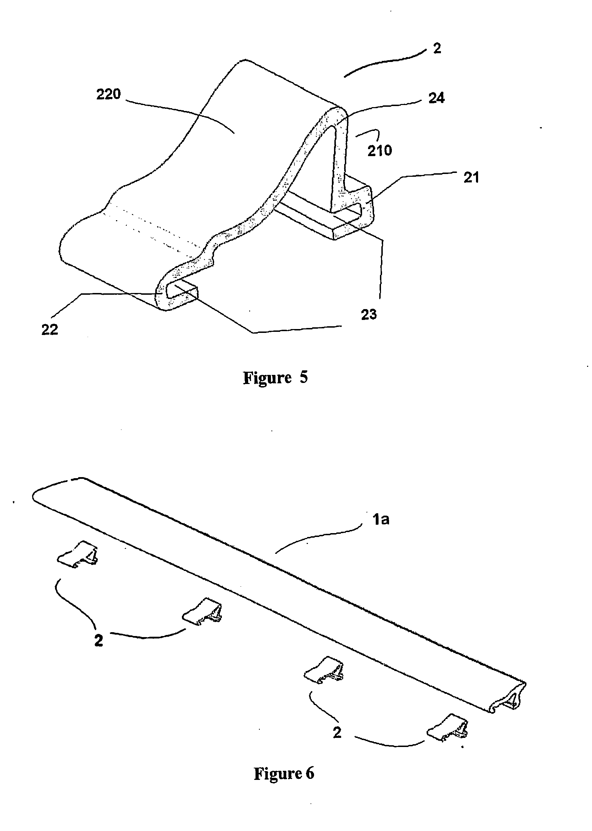

The clasping clip (2) is a short element having an "A" shaped cross-section. Both of the legs (21 and 22) below form a housing (23) by bending downwards then towards each other for grasping the projecting parts (31 a, 31b) of the framework (3). The upper A profile (24) of the clips (2) is arranged to match the profile of the spoiler (1). (Figure 5)

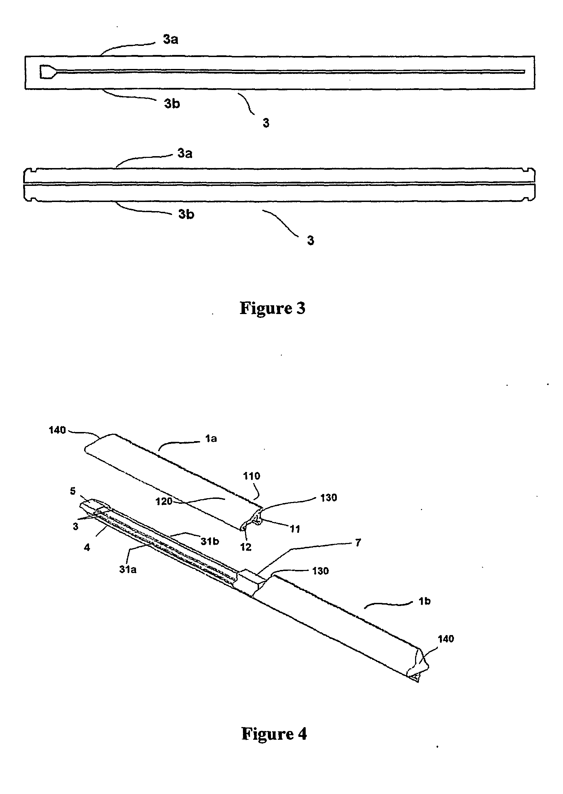

The clasping clips (2), at least one along the length of each half (1a, 1b) of the spoiler (1), can be arranged in different numbers depending on the length of the windshield wiper. The arrangement of the clips (2) along the length of the spoiler (1) and the distances therebetween can be adjusted in different ways depending on the arcuate curve of the supporting framework (3) and the slope of the wiping surface. (Figure 4)

In the preferred embodiment of the present invention, the resilient spoiler (1) material and the less resilient clip (2) material are selected from the same base polymers in order to establish chemical bonds with each other during the injection process and the spoiler (1) is produced by moulding over the pre-produced clasping clips (2). Thus as the spoiler (1) is shaped during the injection process, a chemical bond is established with the clip (2) at the molecular level at the same time and at the end of the process a single piece spoiler (1) is obtained that has firm legs at certain regions for gripping the projecting parts (31a, 31b) of the metal framework (3) and at other regions has a resilient configuration that has the ability of desired stretching during the movement of the wiper on the windshield. By means of this technique, since the resilient portions and the stiff portions of the product are inseparably bonded together, detaching of the spoiler (1) from the metal framework (3) or deforming under heavy operational conditions, at high or low temperature levels or excessive straining is out of the question. Moreover, since this technique does not necessitate a separate adhesion, connection, or assembly process, it provides a relatively easy and inexpensive manufacturing opportunity. Furthermore, the clasping clips (2) are embedded in the product and not visible to the end user which provides a further esthetic advantage for the product.

In another embodiment of the present invention, in case materials that don't allow chemical bonding are used during the injection process, the connection between the spoiler (1) and the clasping clip (2) is maintained by a chemical adhesive that is activated at high temperatures. In this technique, the spoiler (1) is produced by directly moulding over the clasping clips (2) and the said adhesive is applied on the clips upper surfaces (210, 220) before the moulding process. The adhesive that is activated during the injection process provides the clips upper surfaces (210, 220) and the surfaces of the spoiler (1) surrounding thereof to be chemically bonded during the shaping of the spoiler (1). In this technique, a single piece spoiler (1) is provided wherein the spoiler (1) and the clip (2) are inseparably joined that is suitable for all kinds of heavy operational conditions. Since the adhesive is activated at high temperatures and the adhesion process is performed during the injection process, this technique does not require an additional process and also the possibility of the adhesive smearing on the visible surfaces of the product causing esthetic flaws is also eliminated.

In yet another embodiment of the present invention, the clasping clip (2) and the spoiler (1) made of a more resilient material are produced separately and the clip (2) is integrated with the spoiler (1) later by applying adhesive on the clip upper surfaces (210, 220). In this technique, the spoiler (1) is produced to comprise a housing in the region wherein the clip (2) will be arranged with an inner surface that will tangentially surround the clip upper surfaces (210,220).

## Claims

1. A spoiler (1) having a wind receiving surface (120) and having virtually an "A" cross-section, composed of two symmetrical halves (1a and 1b) that will remain on both sides of the connection element (7) at the center of the windshield wiper, mountable on the supporting framework (3) in vehicle windshield wipers such that it will be at the upper side of the framework (3) with respect to the wiper profile (4), comprising two arms (11, 12) that start joined at the top, open up while extending downwards, forming a housing (13) portion at the inner surfaces thereof with a rectangular cross-section to be able to entirely wrap tangentially the projecting parts (31a, 31b) of the supporting framework (3) from both sides and attachment elements (2), and wherein one end (130) of the spoiler (1) facing longitudinally towards the connection element (7) is open and the other free end (140) of the windshield wiper is closed such that the framework (3) and/or the end cap (5) can be received hereinto, **characterized in that** the attachment elements (2) having two legs (21, 22) forming a housing (23) by bending downwards then towards each other in order to be able to grasp the projecting parts (31a,31b) of the supporting framework (3) and having a profile matching the spoiler are provided intermittently lengthwise in the spoiler (1).

2. A spoiler (1) as claimed in Claim 1, **characterized in that** said attachment elements (2) are integrated with the spoiler (1) and is made of a less resilient material than the spoiler (1).

3. A spoiler (1) as claimed in Claim 1, **characterized in that** the wind receiving surface (120) thereof descends starting from the apex point (158) where the windshield facing surface (110) is joined, follows a curve that is first convex (157) and then concave (159) then again convex (151) and meets with an imaginary base line (155) making an angle between 20° to 45° and both of the surfaces (110, 120) below the imaginary base line (155) form convex surfaces by wrapping the supporting framework (3) from the sides and by bending to the underside.

4. A spoiler (1) as claimed in Claim 1, **characterized in that** said closed end (140) forms a closed housing (145) to be able to entirely cover the supporting framework (3) and if any, the end cap (5) thereon from both sides and the end and partially from below, having a rectangular opening on the side facing the wiper profile (4).

5. A spoiler (1) as in Claim 4, **characterized in that** the inwards extending lateral surfaces (141) at the said housing (140) are made longer than the inwards bent legs (144) to be able to wrap the projecting part (31a, 3 1 b) of the metal framework (3) at the remaining part of the spoiler (1).

6. A spoiler (1) as in Claim 4, **characterized in that** the rectangular opening formed below by the inwards extending surfaces (141 and 142) comprises an additional housing (143) with a smaller cross-section at the side facing the closed end (140) of the spoiler (1).

7. A spoiler (1) as in Claim 6, **characterized in that** the width of the said housing (143) is enough to only receive the neck (46) of the body portion of the wiper profile (4).

8. A spoiler (1) as claimed in Claims 1 to 7, **characterized in that** said spoiler (1) is produced by moulding over the said attachment element(s) (2).

9. A spoiler (1) as claimed in Claims 1 to 7, **characterized in that** said attachment element(s) (2) is/are fixed to the said spoiler (1) by means of a chemical adhesive.

10. A spoiler (1) as claimed in Claims 1 to 7, **characterized in that** said attachment element(s) (2) is/are secured to said spoiler (1) by moulding over and/or by adhesion.

## Patentansprüche

1. Störklappe (1) mit einer Windauftrefffläche (120) und einem im Wesentlichen "A"-förmigen Querschnitt, bestehend aus zwei symmetrischen Hälften (1a und 1b), die an beiden Seiten des Verbindungselements (7) in der Mitte des Windschutzscheibenwischers bleiben, und die derart am Tragerahmen (3) der Fahrzeug-Windschutzscheibenwischer montierbar sind, dass sie sich in Bezug auf das Wischerprofil (4) an der Oberseite des Rahmens (3) befinden, umfassend zwei Arme (11, 12), die an der Oberseite verbunden beginnen und sich im Zuge ihrer Erstreckung nach unten öffnen, und an ihren Innenflächen einen Aufnahmeabschnitt (13) mit einem rechteckigen Querschnitt bilden, der die vorspringenden Teile (31 a, 31b) des Tragerahmens (3) von beiden Seiten vollständig tangential umfangen können, und Anbringungselemente (2), und wobei ein Ende (130) der Störklappe (1), das in Längsrichtung dem Verbindungselement (7) zugewandt ist, offen ist, und das andere freie Ende (140) des Windschutzscheibenwischers geschlossen ist, derart, dass der Rahmen (3) und/oder die Abschlusskappe (5) darin aufgenommen werden können, **dadurch gekennzeichnet, dass** die Anbringungselemente (2) zwei Beine (21, 22), die eine Aufnahme (23) bilden, indem sie sich nach unten und dann zueinander hin biegen, um die vorspringenden Teile (31a, 31b) des Tragerahmens (3) zu erfassen, und die ein Profil aufweisen, das mit der Störklappe übereinstimmt, intermittierend längs an der Störklappe (1) vorgesehen sind.

2. Störklappe (1) nach Anspruch 1, **dadurch gekennzeichnet, dass** die Anbringungselemente (2) einstückig mit der Störklappe (1) ausgebildet sind und aus einem weniger elastischen Material als die Störklappe (1) hergestellt sind.

3. Störklappe (1) nach Anspruch 1, **dadurch gekennzeichnet, dass** ihre Windauftrefffläche (120) ab dem Scheitelpunkt (158), an dem die Windschutzscheibenverbindungsfläche (110) verbunden ist, sich nach unten wendet, einer Kurve folgt, die zunächst konvex (157) und dann konkav (159) und dann erneut konvex (151) ist und auf eine imaginäre Basislinie (155) trifft und einen Winkel zwischen 20° und 45° bildet, und beide Flächen (110, 120) unter der imaginären Basislinie (155) konvexe Flächen bilden, indem sie den Tragerahmen (3) von der Seite umfangen und sich zur Unterseite hin biegen.

4. Störklappe (1) nach Anspruch 1, **dadurch gekennzeichnet, dass** das geschlossene Ende (140) eine geschlossene Aufnahme (145) bildet, die den Tragerahmen (3) sowie, falls vorhanden, die Abschlusskappe (5) daran von beiden Seiten und vom Ende und teilweise von unten vollständig abdecken kann, und eine rechteckige Öffnung an der Seite aufweist, die dem Wischerprofil (4) zugewandt ist.

5. Störklappe (1) nach Anspruch 4, **dadurch gekennzeichnet, dass** die sich nach innen erstreckenden Seitenflächen (141) an der Aufnahme (140) länger ausgebildet sind als die nach innen gebogenen Beine (144), um den vorspringenden Teil (31, 31b) des Metallrahmens (3) am übrigen Teil der Störklappe (1) zu umfangen.

6. Störklappe (1) nach Anspruch 4, **dadurch gekennzeichnet, dass** die rechteckige Öffnung, die unterhalb von den sich nach innen erstreckenden Flächen (141 und 142) eine zusätzliche Aufnahme (143) umfasst, deren Querschnitt an der Seite, die das geschlossene Ende (140) der Störklappe zugewandt ist, kleiner ist.

7. Störklappe (1) nach Anspruch 6, **dadurch gekennzeichnet, dass** die Breite der Aufnahme (143) dazu ausreicht, ausschließlich den Hals (46) des Körperabschnitts des Wischerprofils (4) aufzunehmen.

8. Störklappe (1) nach einem der Ansprüche 1 bis 7, **dadurch gekennzeichnet, dass** die Störklappe (1) hergestellt wird, indem sie auf das/die Anbringungselement(e) (2) aufgeformt wird.

9. Störklappe (1) nach einem der Ansprüche 1 bis 7, **dadurch gekennzeichnet, dass** das/die Anbringungselement(e) (2) mithilfe eines chemischen Klebstoffs an der Störplatte (1) befestigt ist/sind.

10. Störklappe (1) nach einem der Ansprüche 1 bis 7, **dadurch gekennzeichnet, dass** das/die Anbringungselement(e) (2) durch Aufformen und/oder Kleben an der Störplatte (1) befestigt ist/sind.

## Revendications

1. Un becquet (1) ayant une surface de réception de vent (120) et ayant presque une section en forme d'un A, composée de deux moitiés symétriques (1a et 1b) qui restent sur les deux côtés de l'élément de liaison (7) au centre de l'essuie-glace, qui est monté sur la structure de soutien (3) dans les essuie-glaces des véhicules de telle sorte qu'il soit sur le côté supérieur de la structure de soutien (3) en ce qui concerne la lame d'essuyage (4), comprenant deux bras (11, 12) qui est joint en haut, s'ouvre en s'étendant vers le bas, formant une partie de logement (13) aux surfaces intérieures de ceux-ci avec une section rectangulaire afin de pouvoir envelopper entièrement tangentiellement les parties en saillie (31a, 31 b) de la structure de soutien (3) en deux côtés et les éléments d'attachement (2), et où une extrémité (130) du becquet (1) faisant face longitudinalement vers l'élément de liaison (7) est ouvert et l'autre extrémité libre (140) de l'essuie-glace est fermée de telle sorte que la structure (3) et/ou le bouchon (5) peuvent/peut être reçu(s) à l'intérieur de celle-ci, **caractérisé en ce que** les éléments d'attachement (2) ayant deux jambes (21, 22) formant un logement (23) en se courbant vers le bas, puis les uns vers les autres afin de saisir les parties en saillie (31a, 31 b) de la structure de soutien (3) et ayant un profilé correspondant au becquet sont fournis par intermittence dans la longueur dans le becquet (1).

2. Un becquet (1) selon la Revendication 1, **caractérisé en ce que** lesdits éléments d'attachement (2) sont intégrés au becquet (1) et est constitué d'un matériau moins résistant que le becquet (1).

3. Un becquet (1) selon la Revendication 1, **caractérisé en ce que** la surface de réception de vent (120) de celui-ci descend à partir du sommet (158) où la surface faisant face à la pare-brise (110) est reliée en faisant une courbe qui est premièrement convexe (157), et puis concave (159), puis de nouveau convexe (151) et se rencontre avec une ligne de base imaginaire (155) faisant un angle de 20° à 45° et les deux surfaces (110, 120) en dessous de la ligne de base imaginaire (155) forment des surfaces convexes en enveloppant la structure de soutien (3) en deux côtés et en se courbant vers le dessous.

4. Un becquet (1) selon la Revendication 1, **caractérisé en ce que** ladite extrémité fermée (140) forme un boîtier fermé (145) afin de couvrir entièrement la structure de soutien (3) et le cas échéant, le bouchon (5) là-dessus en deux côtés et l'extrémité et partiellement par le bas, ayant un orifice rectangulaire sur le côté faisant face à la lame d'essuyage (4).

5. Un becquet (1) selon la Revendication 4, **caractérisé en ce que** les surfaces latérales s'étendant vers l'intérieur (141) dudit boîtier (140) sont plus longues que les jambes courbées vers l'intérieur (144) afin d'envelopper les parties en saillie (31a, 31b) de la structure de soutien (3) à la partie restante du becquet (1).

6. Un becquet (1) selon la Revendication 4, **caractérisé en ce que** l'orifice rectangulaire formé en bas par les surfaces s'étendant vers l'intérieur (141 et 142) comprend un boîtier supplémentaire (143) avec une plus petite section sur le côté faisant face à l'extrémité fermée (140) du becquet (1).

7. Un becquet (1) selon la Revendication 6, **caractérisé en ce que** ledit boîtier (143) n'est juste assez que pour recevoir le col (46) du corps de la lame d'essuyage (4).

8. Un becquet (1) selon les revendications de 1 à 7, **caractérisé en ce que** ledit becquet (1) est fabriqué par moulage sur lesdits/ledit élément(s) d'attachement (2).

9. Un becquet (1) selon les revendications de 1 à 7, **caractérisé en ce que** ledit/lesdits élément(s) d'attachement (2) est/sont fixé(s) audit becquet (1) au moyen d'un colle chimique.

10. Un becquet (1) selon les revendications de 1 à 7, **caractérisé en ce que** ledit/lesdits élément(s) d'attachement (2) est/sont attaché(s) audit becquet (1) par moulage sur celui-ci et/ou par adhérence.
